# EUROPEAN PATENT APPLICATION

(11) **EP 4 848 651 A2**
(43) Date of publication of application: **02.12.2026**
(21) Application number: 26211507.4
(22) Date of filing: 14.02.2017
(51) Int. Cl.: H04L 9/00

(54) **AGENT-BASED TURING COMPLETE TRANSACTIONS INTEGRATING FEEDBACK WITHIN A BLOCKCHAIN SYSTEM**

(30) Priority: 23.02.2016 GB 201603114; 23.02.2016 GB 201603112
(62) Document number(s) of the earlier application(s) in accordance with Art. 76 EPC: 25164665.9 / 4 568 167; 20161894.9 / 3 764 589; 17707676.7 / 3 257 002
(71) Applicant: nChain Licensing AG, 6300 Zug (CH)
(72) Inventor: WRIGHT, Craig Steven, Cardiff (GB); SAVANAH, Stephane, Cardiff (GB)
(74) Representative: Gill Jennings & Every LLP

(57) **Abstract**

This invention relates generally to blockchain implementations and is suited for, but not limited to, use with the Bitcoin blockchain. It can be used for the implementation of automated processes such as device/system control, process control, distributed computing and storage and others. The invention provides a solution which uses a blockchain to control a process executing on a computing resource. In a preferred embodiment, the computing resource, running simultaneously and in parallel to the blockchain, manages a loop-based operation. The computing resource continuously monitors the state of the blockchain as well as any other off-blockchain input data or source. The execution of the loop is influenced by the state of the blockchain. Each iteration of the loop that is executed by the computing resource is recorded in a transaction that is written to the blockchain. It is stored as a hash within the transaction's metadata. If the computing resource finds a transaction which contains a hash relating to the loop it accesses the relevant portion of code. The loop contains a conditional statement which enables the computing resource to decide which action to take. The condition may be dependent upon the state of the blockchain or any other data source. The action can be any type of action, on or off the blockchain. Thus, the combination of the computing resource and blockchain provide a solution which is (at least partially) Turing-complete.

## Description

This invention relates generally to consensus-based electronic ledgers, and in particular to blockchain implementations and technologies. The invention is particularly suited, but not limited to, use with the Bitcoin blockchain and for applications such as device/system control, process control, distributed computing and storage.

In this document we use the term 'blockchain' to include all forms of consensus-based electronic, computer-based, distributed ledgers. These include, but are not limited to blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention.

A blockchain is a consensus-based, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block to that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. These include but are not limited to:
- Storing metadata
- Implementing digital tokens
- Establishing contracts that are signed with digital signatures.

It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing etc) while being more versatile in their applications.

One area of current interest within the blockchain community is Turing Completeness, and specifically how to facilitate Turing Complete behaviour into blockchain technologies, which have been designed to restrict functionality for security reasons.

It is disputed whether Bitcoin scripting language is Turing complete because it does not natively support complex flow control functionality, for example, loops to occur. One advantage of this restriction is that the programs have predictable execution times. Another significant advantage of limiting the Bitcoin scripts to linear or tree-like decision tasks is that this avoids infinite loops, which can be used as a means of launching exploits such as a denial of service (DoS or DDoS) attack. As a result of this limitation, Bitcoin scripts are often limited to being used for linear tasks rather than more complex applications such as the control of automated tasks, device management etc.

The Ethereum blockchain platform approaches this issue by incorporating a "built in" Turing complete language called Solidity. This language is native to the Ethereum platform so that scripts written in Solidity can include control flow mechanisms such as loops. However, Ethereum has suffered from several attacks and exploits.

There also remains a desire within a significant portion of the blockchain community to preserve the use of the limited scripting languages in relation to blockchain technologies due to the security concerns mentioned above, and because of the widespread use and familiarity of the Script language used by Bitcoin.

Thus, it is desirable to provide a solution which facilitates Turing-complete functionality such as looping mechanisms and other complex control structures to be integrated or combined with blockchain scripts, while avoiding the damaging effects of potential security weaknesses such as infinite loops. Such a solution would provide numerous benefits including:
- Enabling the automation of complex blockchain-related transactions;
- Controlling the metadata stream that is recorded onto the Blockchain
- Extending the functionality and applications of blockchain platforms which do not rely on or incorporate purposefully Turing complete languages

Such an improved solution has now been devised. The present invention provides a solution which comprises the novel combination of a blockchain coupled with a parallel computing resource which enables the emulation, simulation and/or incorporation of loops and other Turing-complete functionality outside the typical blockchain script. In turn, this facilitates numerous applications for automated tasks relating to, for example, distributed data storage, distributed computing and the control of drones, or any IoT (Internet of Things) devices. Such applications may include using the blockchain for metadata storage, managing digital tokens and establishing contracts.

Thus, in accordance with the present invention there is provided a solution as defined in the appended claims. In accordance with the invention there may be provided a (process) control method and corresponding system. The invention may be referred to as a blockchain-implemented control method/system. It may control an automated task or process.

The invention may be arranged to use a blockchain to emulate/simulate Turing completeness. Additionally or alternatively, the invention may enable applications which involve Turing complete control mechanisms to be executed on a blockchain platform.

Additionally or alternatively, the invention may be described as a method or system arranged to use a blockchain and/or one or more blockchain transactions to control a process executing on an off-block computing resource. Thus, the invention comprises an arrangement wherein distinct computing components, which are functionally and architectural different from each other, are arranged to interact so as to provide a novel technical result. The interaction of the different computing systems (computing resource and blockchain) results in a highly powerful control solution.

From the perspective of the computing resource, the invention provides the advantage of a permanent, tamper-proof record of the execution of the program. From the blockchain perspective, the invention provides an improved blockchain implementation because it enables Turing-complete behaviour to be at least partially simulated via use of the blockchain, which in turn enables more functionally complex blockchain-based applications to be deployed. This is all achieved while maintaining the use of the limited scripting language for the blockchain transactions. The scripting language may be limited (restricted) in that its design or implementation prevents or at least does not natively support the incorporation of complex control flow mechanisms such as loops into code written in that language. The instructions set of the language i.e. the "commands" or "op-codes" that the programmer can use, may be arranged such that it does not include commands for complex flow control mechanisms.

The blockchain may be associated with, or used with, a blockchain protocol which comprises a limited language. This may be a scripting language. The invention may extend the functionality of a limited scripting language for the execution of tasks using the blockchain.

The invention may use the state of the blockchain to execute a loop-based process. The loop-based process may be performed on a computing resource operating in parallel to the blockchain network. The computing resource may be distinct from (not part of) the blockchain network. The computing resource may be referred to as an "oracle" or a "bot".

This enables the blockchain protocol to utilise a functionally limited scripting language while allowing control flow mechanisms such as looping mechanisms to be implemented off the blockchain. This novel combination enhances the versatility of blockchain technology while preserving security.

The method may comprise the steps of:
executing a loop on a computing resource; and
using the state of the blockchain to influence the execution of the loop.

Additionally or alternatively, the invention may comprise the step of implementing a Turing machine using a blockchain with code references provided in one or more transactions and/or blocks (of transactions).

The computing resource may be any processor-based device or system. It may, for example, be a server or plurality of servers. It may be a standalone or a distributed resource. The blockchain may be the Bitcoin blockchain or any other blockchain-related platform. The blockchain may be a consensus-based distributed ledger.

Information relating to at least one iteration of the loop may be stored in a transaction on the blockchain. The information may be stored as metadata in the transaction. The loop may contain a "If condition then action" (ICTA) instruction.

The method may further comprise the step of generating a cryptographic hash of code relating to the loop and, preferably, storing the cryptographic hash within a transaction on the blockchain. The code may be a code block containing a control flow statement, such as an "If condition then action" statement. The code block may be a portion of code such as a whole or partial subroutine (e.g. function, method, procedure). The control flow statement may control or influence how the loop executes e.g. number of iterations.

The computing resource may be arranged to monitor the state of the blockchain for a transaction comprising a cryptographic hash of code relating to the loop.

The method may further comprise the steps:
for each iteration of the loop:
evaluating a condition and performing at least one action based on the outcome of the evaluation, wherein the at least one action comprises:
causing at least one transaction to be written to the blockchain; and/or
causing an off-blockchain action to be performed.

The condition may be used to monitor any value, signal or input, regardless of where, how or by whom it is generated, either on or off the blockchain. The condition may relate to data received, detected or generated by the computing resource; and/or the state of the blockchain. The condition may be described as a "trigger". It may be or relate to a particular state of the blockchain, or an event detected off-block (e.g. a date or temperature reading, etc.), or a combination of both.

The *Action* may include sending a signal to cause an event off clock, or broadcasting a new transaction, or a combination of both. The index may be maintained (i) off block within the computing resource ("Manager") or may be (ii) a value stored within a transaction that is then broadcast.
(i) and (ii) represent two alternative ways to maintain the control data.

The computing resource may be arranged to monitor:
the state of the blockchain; a value generated or received by the computing resource;
and/or a data or signal source provided off the blockchain.

The method may comprise the steps of:
i) using the blockchain as a storage component for data, instructions or a pointer to data and/or instructions; and
ii) using a computing resource as a control flow management component for a Turing complete process, the computing resource being arranged to execute a looping mechanism.

Thus, the blockchain may serve as the non-erasable tape of a Turing machine. The computing resource may serve to control the flow of execution of the process, implementing a loop and extending the functionality of the scripting language.

The method may further comprise the step of restarting (respawning) the loop at a specified iteration. The loop may be restarted if the computing resource finds a predetermined hash of a portion of code in a transaction within the blockchain. The portion of code may relate to the body of the loop. It may comprise an ICTA statement.

The computing resource may respawn the loop at each iteration. This may be performed in a variety of ways. For example, a code block for the loop may be:
hard-coded into the computing resource itself;
stored in a private or publicly available file;
stored as an entry on a private or public hash table file;
or a combination of the above.

The code block may be static with hard-coded variables or may be static but contain parameter(s) that can be populated. The parameters may be single values of any data format, or could be small chunks of code, or combinations of the above. The parameters may be populated by retrieving them directly from metadata in a transaction (e.g. bitcoin transaction) or from an external source such as an internal database or a private/public file or hash table or any combination of the above. Pointers to the external source of parameter values may be stored in metadata in a transaction.

The information relating to the iteration may be specified using metadata provided within, or in association with, the transaction.

The computing resource may comprise or be in communication with a registry, database, repository or other storage facility which enables the computing resource to access a pre-stored version of the subroutine. The registry may store:
i) a cryptographic hash of code relating to the loop; and
ii) information indicative of a location where a copy of the code can be accessed from.

The method may further comprise the step of using a blockchain transaction to update code for the loop so that the existing code is replaced with new code. Preferably, the transaction is a multi-signature P2SH transaction. A hash of the existing code and a hash of the new code may be stored.

The invention also provides a system for implementing any embodiment of the method described above.

The invention may provide a computer-based system. The system may be arranged to use a blockchain to control a process executing on a computing resource. Additionally or alternatively, the system may be arranged to use (interact with) a blockchain to simulate or emulate Turing completeness, and/or enable tasks (applications) involving control flow structures such as loops to be performed via the blockchain.

The system may comprise:
a blockchain; and
a computing resource arranged to execute a loop such that execution of the loop is influenced by state of the blockchain.

Information relating to at least one iteration of the loop is stored in a transaction on the blockchain. Preferably, the information is stored as metadata in the transaction.

Preferably, the computing resource is arranged to generate a cryptographic hash of code relating to the loop. Preferably, the cryptographic hash is stored within a transaction on the blockchain. Additionally or alternatively, the computing resource is arranged to monitor the state of the blockchain for a transaction comprising a cryptographic hash of code relating to the loop.

Preferably, for each iteration of the loop: a condition is evaluated and at least one action is performed based on the outcome of the evaluation; the at least one action comprising:
causing at least one transaction to be written to the blockchain; and/or
causing an off-blockchain action to be performed.

The condition may relate to data received, detected or generated by the computing resource; or the state of the blockchain.

The computing resource may be arranged to monitor:
the state of the block chain;
a value generated or received by the computing resource; and/or
a data or signal source provided off the blockchain;

The blockchain may serve as a storage component for data, instructions or a pointer to data and/or instructions. The computing resource may serve as a control flow management component for a Turing complete process, the computing resource being arranged to execute a looping mechanism. The blockchain may be arranged for operation with a limited language such as, for example, the Bitcoin Script language.

The loop may be restarted at a specified iteration if the computing resource finds a predetermined hash of a portion of code in a transaction within the blockchain. The information relating to the iteration may be specified using metadata provided within, or in association with, the transaction.

The computing resource may comprise or be in communication with a registry which enables the computing resource to access a pre-stored version of the subroutine. The registry may store:
i) a cryptographic hash of code relating to the loop; and
ii) information indicative of a location where a copy of the code can be accessed from.

The system may be configured to use a blockchain transaction to update code for the loop so that the existing code is replaced with new code. Preferably, the transaction is a multi-signature P2SH transaction. Preferably, the system is arranged to store a hash of the existing code and a hash of the new code.

Any feature described in relation to one aspect or embodiment of the invention may also be applicable in respect of any other aspect or embodiment. For example, any feature described in relation to the method may also be used in relation to the system, and vice versa.

These and other aspects of the present invention will be apparent from and elucidated with reference to, the embodiment described herein. An embodiment of the present invention will now be described, by way of example only, and with reference to the accompany drawings, in which:
Figure 1 shows an illustrative use of the Blockchain as a non-erasable tape for the Turing machine.
Figure 2 illustrates a subroutine that can be used by the Manager to implement a repeat loop in conjunction with a blockchain.
Figure 3 shows an example of a ICTA (If Condition Then Action) code block which can be used in accordance with an embodiment of the invention.
Figure 4 shows the bitcoin commands that allow users to move data in and out of the alternative stack, in accordance with an embodiment of the invention.
Figure 5 shows the Manager's code registry in accordance with an embodiment of the invention.
Figure 6 shows metadata associated with the Manager's code block, in accordance with an embodiment of the invention.
Figure 7 shows metadata associated with the output at a particular iteration of the Manager's loop, in accordance with an embodiment of the invention.
Figure 8 shows a transaction script and metadata, in accordance with an embodiment of the invention.
Figure 9 shows an illustrative Manager software patching verification and audit trail.
Figure 10 shows an illustrative use of the present invention, and shows an embodiment of a vote counting bot's repeat loop in pseudocode.

The following describes an illustrative embodiment which uses the Bitcoin Blockchain. However, other blockchain protocols and implementations may be used. The invention is not limited in this regard.

The present invention addresses the problem of how to facilitate Turing Completeness on an operationally limited blockchain platform (ie one which uses a scripting language that does not support complex control mechanisms), and therefore extend the uses or applications to which the blockchain can be put. Marvin Minsky (Minksy et al., Computation: Finite and Infinite Machines, Prentice Hall, Inc, 1967) described how a non-erasable tape can be used to implement a machine that is Turing complete, and is able to execute any algorithm that can also be executed on a Universal Turing machine.

The present invention comprises a computing resource which operates in conjunction with the blockchain, using it as the non-erasable tape in the implementation of a Turing machine. This computing resource runs in parallel with the blockchain network, overseeing and handling the execution of a looping process. The looping process is designed to perform a given task such as, for example, the automation of a process or control of a device or system (for example control of an IoT device). The parallel resource monitors the state of the blockchain and can cause transactions to be written to the blockchain. Therefore, it may be referred to herein as "the Manager' for convenience of reference.

Features and advantages of the invention include:
- Enabling the Blockchain to serve as a non-erasable tape of the Turing Machine
- The function and implementation of a computer-based monitoring and management component (Manager) which operates alongside the Blockchain
- Using the Manager as the instruction table of the Turing Machine
- Managing the Manager using a code registry
- Transaction metadata relating to the Manager's code and respawning of the loop
- Using digital signatures to implement software updates to the Manager
- A special implementation of the Manager using an alternate Blockchain.

### The Blockchain as the Turing Machine's Non-Erasable Tape

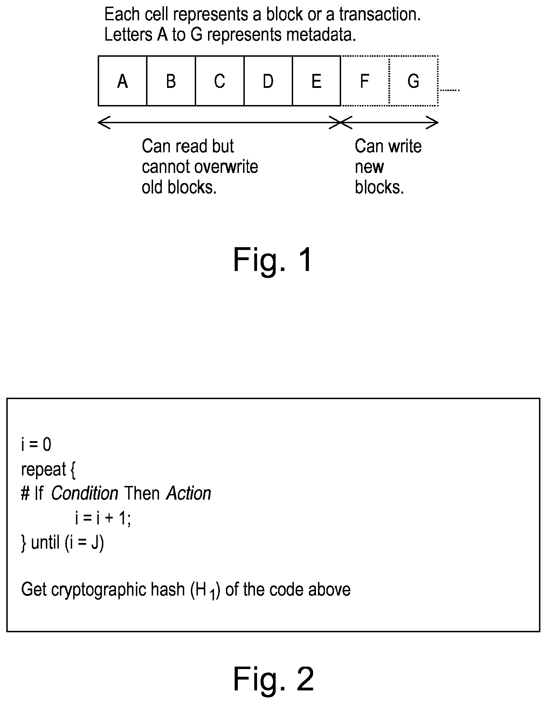

With reference to Figure 1, the present invention utilises the Blockchain as a non-erasable tape of the Turing Machine, with the following definitions and features:
1. the Blockchain acts as the tape of the Turing Machine. Each transaction in the Blockchain represents a cell on the tape. This cell can contain symbols from a finite alphabet.
2. The tape head can read information from the blocks that have already been written onto the Blockchain.
3. The tape head can write new blocks, containing many transactions, to the end of the Blockchain. However, they cannot write onto blocks that already exist. As such, the Blockchain tape is non-erasable.
4. Metadata for each transaction can be stored as part of a multi-signature pay-to-script-hash (P2SH) transaction.

An important function of the Manager is to act as an agent that monitors the current state of the Blockchain. It can also receive a signal or input from any off-block source. Depending on the Blockchain state and/or a received input, the Manager may perform certain actions. The manager decides which action(s) are to be performed. These may or may not involve actions in the 'real world' (i.e. off block) and/or actions on the Blockchain (such as creating and broadcasting new transactions). The action that the Manager takes may be triggered by the Blockchain state or by some off-block input. The Manager may also decide on the next set of transactions to be broadcast to the Bitcoin network, and subsequently written to the Blockchain.

The Manager's action(s) run in parallel and simultaneously to the Bitcoin network. In a sense, this extends the function of the behaviourly-restricted Bitcoin script. This continuous monitoring implements the 'loop' control-flow constructs making the combined Manager and Blockchain system Turing Complete.

### The Manager as the Turing Machine's instruction table

In accordance with an embodiment of the invention, the Turing Machine includes two stacks:
- Data stack: This is represented by the Blockchain as described above.
- Control stack: This is represented by the Manager function. This stores information relating to the repeat control-flow function.

The separation of the control stack from the data stack provides the advantage of preventing infinite loops from occurring within the blockchain (e.g. Bitcoin) core. This in turn mitigates denial-of-service attacks on the Bitcoin system.

The Manager manages and runs subroutines that are able to loop via any type of loop construct (e.g. FOR-NEXT; WHILE, REPEAT UNTIL; etc). An illustrative embodiment described herein includes a process using one example of the 'repeat' construct (see Figure 2). The user specifies the index (*i*) and the limit (*J*). These represent the current iteration number (typically counted starting from 0) and the total number of iterations of the repeat loop respectively.

For each iteration:
1. The Index increments by 1. For the exit condition, the iterations will stop when the index reaches the limit
2. A code block containing an "if *condition* then *action*" (ICTA) statement is executed; the action may be any action on or off the blockchain;
3. A cryptographic hash of this subroutine is computed. This can be stored in the Blockchain as part of a transaction (Tx). Since the hash is unique to each code block, it will enable verification of which code has been used

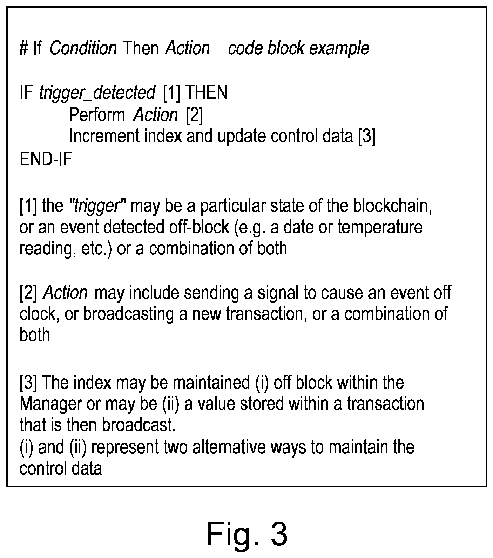

Thus, the body of the loop includes a code block. Each code block contains a "If *condition* then *action*" (ICTA) statement (see Figure 3). This monitors the current state of the Blockchain for transactions matching the:
- Start or triggering condition (e.g when a particular Bitcoin address reaches 10 BTC).
- Repeat condition (i.e. a metadata or hash associated with the previous iteration).
- Stop condition (i.e. last iteration of the loop).

The ICTA statement enables the Manager to decide on the next transaction to make, based on the current state of the blockchain. Making the next transaction involves broadcasting the transaction onto the Bitcoin network, and writing the new transaction onto the Blockchain. This acts as a record that this iteration has been executed. Once the transaction has been written onto the Blockchain, the Manager will subsequently find that the previous iteration has been executed and written onto the Blockchain, and will execute the next iteration. The latter continues until the repeat loop exits when the index (*i)* reaches the limit (*J*) specified in the code block.

Each transaction is saved in the blockchain in a way that can be reused. In a Bitcoin implementation, each signature in a transaction is appended with a SIGHASH flag. This flag can take on different values, each indicating whether other parts of the transaction can be amended without involvement of the owner of this signature. A reusable transaction has the SIGHASH flag 'SigHash_AnyoneCanPay' in one of the transaction inputs. This permits anyone to contribute to the inputs of the transaction. This parameter enables the Manager's ICTA function to be executed and repeated multiple times and with different inputs. Use of the function can be restricted to authorised parties - for example, via copyright of the reusable transaction.

The 'If *condition*' section of the ICTA code block can monitor any type of condition. This is similar to other programming languages (e.g. C, C++, Java) and not limited to information stored on the Blockchain. Some example conditions are listed below:
- Monitor the date and time (i.e. when a certain date and time are reached).
- Monitor the weather (i.e. when the temperature is below 10 ^{O}C and it is raining).
- Monitor social media (i.e. when I've received a message from my friend).
- Monitor conditions of a contract or a trust (i.e. when company A buys company B).
- Monitor news and events (i.e. when soccer team A wins a match).
- Monitor information from the internet of things (i.e. when a light bulb needs replacing).
- Monitor data from a mobile / wearable device (i.e. when a wearable step tracking device counts 10000 steps).
- Monitor results from cloud computing (i.e. when a computation is completed and results are received).
- Monitor remote data storage (i.e. if file still exists remotely).

The 'Then *action*' section of the ICTA code block can execute a number of actions. The invention is not limited with regard to the number or type of actions that can be taken. The action is not limited to a transaction on the Blockchain, although a transaction containing metadata related to the action may be written on the Blockchain.

The metadata can be of any form specified by the Manager. However, in accordance with one embodiment of the invention, the metadata may store a hyperlink to a file containing more data or instructions relating to the action. The metadata may store both a hyperlink to a hash table containing more data or instructions relating to the action along with a hash of the action that acts as the loop-up key for the hash table. An embodiment may use a link similar in style to the BitTorrent's magnet URL format.

A list of example actions is listed below.
- Bitcoin transactions (i.e. send Bitcoins to a particular address).
- Social media (i.e. send a message to a friend).
- Trading (i.e. sell X shares).
- Internet of things (i.e. switch off a light bulb).
- Commerce (i.e. purchase an item online).
- Online services (i.e. pay a monthly fee or pay for services requested using Bitcoin).

As the invention is not limited in respect of the nature, type or number of actions performed, it provides a highly versatile solution which may be applied to great advantage over a wide range of applications.

The Manager's control stack can be implemented in a number of ways that are specific to the needs of each user. For example, the repeat loop of the control stack can be based on any Turing Complete language. One possible choice of language is the Forth style stack-based language. An advantage of using this language is that it keeps the control stack consistent in programming style with the Bitcoin scripts which are already known and in wide usage.

### Using the Bitcoin Script's Alternate Stack as a Data Storage Space

The Bitcoin script contains commands, also called op codes, which enable users to move data onto an alternative stack, known as the 'alt stack'.

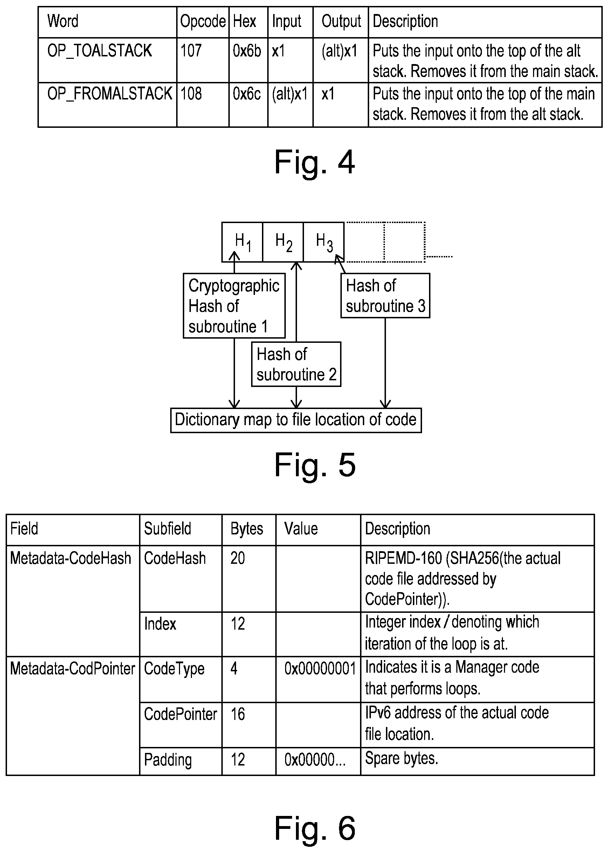

The op codes are:
- OP_TOALTSTACK - which moves data from the top of the main stack onto the top of the alt stack.
- OP_FROMALTSTACK - which moves data from the top of the alt stack to the top of the main stack (See Figure 4).

This enables data from intermediate steps of calculations to be stored in the alt stack, similar to the 'memory' function which allows data to be stored on the calculator. In accordance with an illustrative embodiment of the invention, the alt stack is used for configuring bitcoin scripts to solve small computation tasks and returning the results in the computation.

### Using a Code Register to Manage the Manager

The Manager also manages a registry of all the codes that it owns and runs. This registry is structured like a lookup table or dictionary that maps a specific key to a specific value (see Figure 5). The key and value pair is represented by the hash of the code block (H₁) and the IPv6 address of where the code is stored respectively. To retrieve the code block using the key H₁, the lookup table is used to retrieve the associated value (this is the location where the code is stored) and retrieves the source code accordingly.

The implementation of the code registry can vary. For example, the lookup table can be implemented using a locally managed list, or a P2P distributed hash table. The source code can be stored locally, remotely, or using a decentralized file storage system. This could be implemented with a magnet URI format or any link format that uses shared zero knowledge encryption.

### Transaction Metadata of the Manager's Code, and Re-Spawning of the Loop

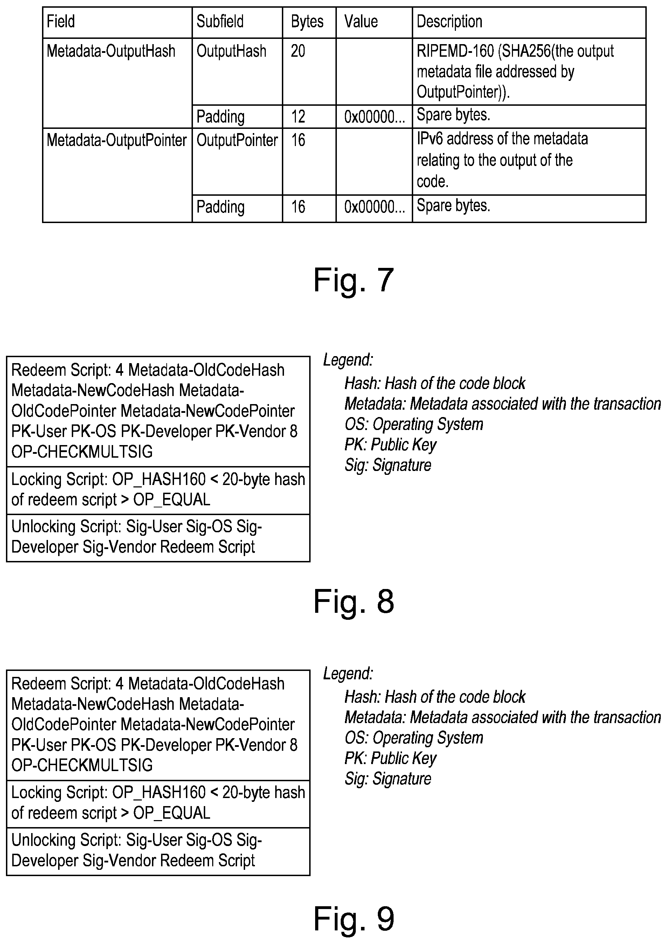

Information required to respawn the Manager's loop at a particular iteration is stored as metadata in the transaction recorded on the Blockchain (see Figure 6 and Figure 7).

In this way, a transaction on the blockchain stores or provides access to information about a given iteration of the loop which is being executed on the Manager. This information can include the values of any variables associated with the loop, such as index *i*, and any other necessary information such as values for parameters used in the code block or location-related data specifying where further required information can be accessed.

The metadata itself is stored as part of a multi-signature pay-to-script-hash script (P2SH) in the transaction. See Figure 8 for the script's format. The metadata recorded with the transaction also gives the ability to record an audit trail of how the code has been executed in the past.

There are several ways in which the Manager could respawn the repeat loop code block at each iteration. The code block might be hard-coded into the Manager itself, or could be stored in a private or publicly available file, or stored as an entry on a private or public hash table file, or a combination of the above. The code block could be static with hard-coded variables or could be static but contain parameter(s) that can be populated. The parameters could be single values of any data format, or could be small chunks of code, or be combinations of the above. The parameters could be populated by retrieving them directly from metadata in a transaction (e.g. bitcoin transaction) or from an external source such as an internal database or a private/public file or hash table or any combination of the above. Pointers to the external source of parameter values might be stored in metadata in a transaction.

The following steps provide one example of how the Manager can respawn a repeat loop code block at the *i*th iteration. In this example, the code registry is a hash table whereby the hash values act as look-up keys for the table and are stored in metadata on transactions.
1. The Manager monitors the Blockchain for transactions that contain hashes of the code block that matches entries in the code registry.
2. The Manager finds a transaction that contains the corresponding hash (H₁).
3. The Manager reads the 'Metadata-CodeHash', gets the CodeHash field to get H₁ and uses it to retrieve the code (C₁). If RIPEMD-160(SHA256(C₁)) equals H₁, the code has not been changed and it is safe to proceed to the next step.
4. The Manager reads the 'Metadata-CodeHash' which stores the index *I*, and respawns the code at the *i*^{th} iteration. In other words, the loop is 'reloaded' at the appropriate iteration
5. The signature of the User is included in the P2SH command to verify the origin of the metadata.
6. The Manager reads the 'Metadata-OutputHash' and 'Metadata-OutputPointer' (see Figure 6) to retrieve the output of the previous steps, if these data are required for this iteration of the loop.

Multiple signatures may be required to unlock the transaction (e.g. the User, the Operating System, the Software Developer and the Software Vendor). This enables a digital rights management (DRM) system for managing the rights to operate the codes by all parties involved in the P2SH transaction.

### Updating the Manager's Code

Software updates and patches for code blocks that relate to the Manager are securely authorized using a multi-signature P2SH transaction (see Figure 8). The multi-signature transaction records metadata of the old and new code blocks as shown in Figures 8 and 9. This makes a record of the changeover of the old code to the new code, thereby providing an audit trail of the software update. The Manager needs to store all hashes of the old and new blocks of source codes. The hash of the new and old source code blocks can be used to verify the integrity of the code files.

In accordance with an embodiment of the invention, multiple signatures are required to unlock the transaction (e.g. the User, the Operating System, the Software Developer and the Software Vendor). This provides a DRM system for managing software updates and patches for codes that are used by the Manager.

Unlike most software, which does not allow software to be updated while it is running, an advantage of the present invention is that software updates can occur in the middle of executing a loop. This provides a dynamic and responsive solution which can be reconfigured in real-time and with minimal disruption to the process which is being controlled by the invention.

The information captured on the Blockchain (see Figure 8 and Figure 9) can be used to update to the new code in the middle of a loop, and start the next iteration step using the output metadata from the previous iteration from the old code.

### Example Use

The current Bitcoin scripting language does not allow loops to take place. This prevents would-be attackers from using Bitcoin payments to trigger continuous and automated actions which would otherwise require external intervention to halt them. However, as the Manager of the invention continuously monitors information on the Blockchain, this allows complex automated actions to be performed based on up-to-date information on the Blockchain in a safe manner.

The following illustrates how the Manager's control stack can be used to automate processes involving an automated and online vote counting bot. It should be noted that this is not restricted to "voting" in the sense of electoral or political voting, but can be used for any application in which selection or choice-making is involved. The term "vote" may simply be used to mean "selection" or "choice" or "indication".

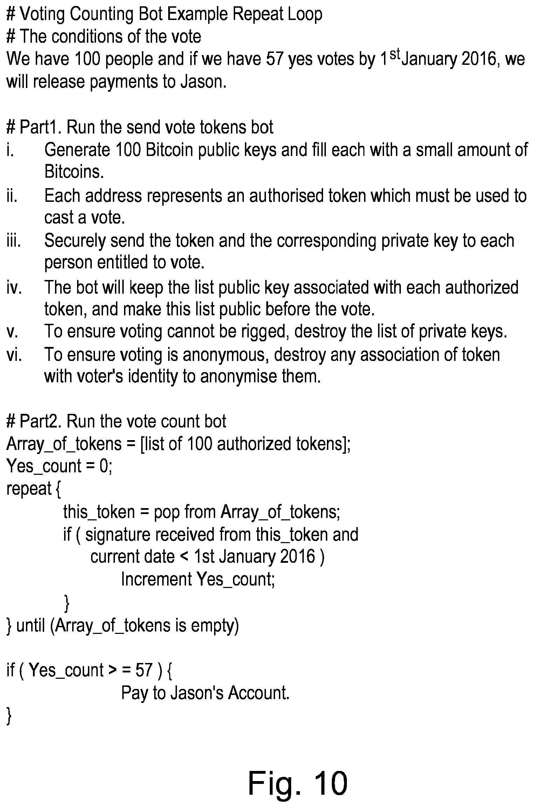

The vote counting bot is designed to facilitate fair and pseudo-anonymous voting, with the Blockchain recording an unalterable, permanent audit trail of the vote counting process. The vote counting bot is automated using the Manager's control stack and repeat loop (see Figure 10). The following scenario illustrates how this operates.

There are 100 voters. If 57 unique "Yes" votes are received before 1^{st} January 2016, payments will be released to the Chair, Jason. The voting process is divided into two parts:
- Token distribution
- Counting

For the token distribution, 100 voting tokens are distributed to each authorized voter. Each token is represented by a (Bitcoin) public key and private key pair. This is distributed to each voter using a secret exchange protocol. Each Bitcoin public key and address is loaded with a small amount of Bitcoin representing one vote. The bot keeps the list of public key associated with each authorized token and makes this list public before voting begins. To ensure voting cannot be rigged and that voting is anonymised, the list of private keys and the mapping between the voter's identity and their token is destroyed (i.e. never stored).

Having an anonymized and pre-authorized list of addresses provides other important benefits. It ensures that only those who are authorized can cast a valid vote. It can also facilitate the exclusion of any unwanted votes that originate from particular addresses (e.g. spammers, disqualified voters) without compromising the identity of the voters. To implement the counting process, the Manager runs a repeat loop. The list of addresses are be kept in the bitcoin script, and transferred to the alternate stack for storage of data. Once an address has been counted, it is removed from the alternate stack and no longer added to the next transaction. The repeat loop stops when the list of address becomes empty.

Instead of using the integer index *i* to keep track of where the loop is currently at, the vote bot Manager uses it to store the intermediate value of the vote count. This ensures that the intermediate value of vote count is stored in the Blockchain. This provides an audit trail, and shows that the vote counting process is fair.

If the amount of unique "Yes" votes received reaches 57, the agreed amount of Bitcoins will be paid to Jason's account. The cryptographic hash of the vote counting script, and the IPv6 address of where this script is stored, are released to the public. This means that the public has enough information to perform a recount, and ensure the vote counting process is fair and correct.

### Enumerated Example Embodiments

The present disclosure is hereby discussed based on the following clauses that are related to the above aspects, which are provided herein as exemplary embodiments for better explaining, describing and understanding the claimed aspects and embodiments.
1. A method of using a blockchain to control a process executing on a computing resource, the method comprising the step:
   executing a loop on the computing resource; and
   using the state of the blockchain to influence the execution of the loop.
2. A method according to clause 1, wherein information relating to at least one iteration of the loop is stored in a transaction on the blockchain.
3. A method according to clause 2 wherein the information is stored as metadata in the transaction.
4. A method according to any preceding clause and further comprising the step of generating a cryptographic hash of code relating to the loop and, preferably, storing the cryptographic hash within a transaction on the blockchain.
5. A method according to any preceding clause wherein the computing resource is arranged to monitor the state of the blockchain for a transaction comprising a cryptographic hash of code relating to the loop.
6. A method according to any preceding clause, the method further comprising the step:
   for each iteration of the loop:
   evaluating a condition and performing at least one action based on the outcome of the evaluation, wherein the at least one action comprises:
   causing at least one transaction to be written to the blockchain; and/or
   causing an off-blockchain action to be performed.
7. A method according to clause 5 or 6, wherein the condition relates to:
   data received, detected or generated by the computing resource; or
   the state of the blockchain.
8. A method according to any preceding clause, wherein the computing resource is arranged to monitor:
   the state of the block chain;
   a value generated or received by the computing resource; and/or
   a data or signal source provided off the blockchain;
9. A method according to any preceding clause, and comprising the steps:
   i) using the blockchain as a storage component for data, instructions or a pointer to data and/or instructions; and
   ii) using a computing resource as a control flow management component for a Turing complete process, the computing resource being arranged to execute a looping mechanism.
10. A method according to any preceding clause and further comprising the step:
   restarting the loop at a specified iteration if the computing resource finds a predetermined hash of a portion of code in a transaction within the blockchain.
11. A method according to clause 10 wherein information relating to the iteration is specified using metadata provided within, or in association with, the transaction.
12. A method according to any preceding clause wherein code for the loop is:
   hard-coded into or on the computing resource;
   stored in a private or publicly available file; and/or
   stored as an entry on a private or public hash table file; and/or
   a static code block with hard-coded variables or at least one parameter.
13. A method according to any preceding clause wherein code for the loop is associated with or comprises at least one parameter which is:
   populated, initialised or instantiated with a single value of any data format;
   a portion of code;
   retrieved from metadata in a blockchain transaction or from an source external to the computing resource;
   retrieved from a database, or a private or public file or hash table; and/or
      populated using values which are accessed using at least one pointer to a data source, preferably wherein the at least one pointer is stored as metadata in a transaction on the blockchain.
14. A method according to any preceding clause, wherein the computing resource comprises or is in communication with a registry which enables the computing resource to access a pre-stored version of the subroutine.
15. A method according to clause 14 wherein the registry stores:
   i) a cryptographic hash of code relating to the loop; and
   ii) information indicative of a location where a copy of the code can be accessed from.
16. A method according to any preceding clause and further comprising the step of:
   using a blockchain transaction to update code for the loop so that the existing code is replaced with new code;
   preferably wherein the transaction is a multi-signature P2SH transaction.
17. A method according to clause 16 and further comprising the steps:
   storing a hash of the existing code and a hash of the new code.
18. A computer-based system arranged to use a blockchain to control a process executing on a computing resource, the system comprising:
   a blockchain; and
   a computing resource arranged to execute a loop such that execution of the loop is influenced by state of the blockchain.
19. A system according to clause 18, wherein information relating to at least one iteration of the loop is stored in a transaction on the blockchain; preferably wherein the information is stored as metadata in the transaction.
20. A system according clauses 18 or 19 wherein the computing resource is arranged to:
   i) generate a cryptographic hash of code relating to the loop and, preferably, storing the cryptographic hash within a transaction on the blockchain; and/or
   ii) monitor the state of the blockchain for a transaction comprising a cryptographic hash of code relating to the loop.
21. A system according to clauses 18 to 20, wherein for each iteration of the loop:
   a condition is evaluated and at least one action is performed based on the outcome of the evaluation; the at least one action comprising:
   causing at least one transaction to be written to the blockchain; and/or causing an off-blockchain action to be performed.
22. A system according to clause 21, wherein the condition relates to:
   data received, detected or generated by the computing resource; or
   the state of the blockchain.
23. A system according to clauses 18 to 22, wherein the computing resource is arranged to monitor:
   the state of the block chain;
   a value generated or received by the computing resource; and/or
   a data or signal source provided off the blockchain;
24. A system according to clauses 18 to 23, wherein:
   i) the blockchain serves as a storage component for data, instructions or a pointer to data and/or instructions; and
   ii) the computing resource serves as a control flow management component for a Turing complete process, the computing resource being arranged to execute a looping mechanism.
25. A system according to clauses 18 to 24 wherein the loop is restarted at a specified iteration if the computing resource finds a predetermined hash of a portion of code in a transaction within the blockchain.
26. A system according to clause 25 wherein the information relating to the iteration is specified using metadata provided within, or in association with, the transaction.
27. A system according to clauses 18 to 26, wherein the computing resource comprises or is in communication with a registry which enables the computing resource to access a pre-stored version of the subroutine.
28. A system according to clause 27 wherein the registry stores:
   i) a cryptographic hash of code relating to the loop; and
   ii) information indicative of a location where a copy of the code can be accessed from.
29. A system according to clause 18 to 28 wherein the system is configured to:
   use a blockchain transaction to update code for the loop so that the existing code is replaced with new code;
   preferably wherein the transaction is a multi-signature P2SH transaction.
30. A system according to clause 29 wherein the system is arranged to store a hash of the existing code and a hash of the new code

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A method for controlling a loop-based process executed on a computing resource using a blockchain, comprising: executing the loop on the computing resource;
storing information relating to at least one specified iteration of the loop as metadata in a transaction and broadcasting the transaction for writing to the blockchain;
monitoring the blockchain for a transaction having metadata storing information relating to at least one specified iteration of the loop; and
influencing the execution of the loop on the computing resource based on the information relating to at least one specified iteration of the loop,
wherein the loop executed on the computing resource is based on a Turing-complete language;
wherein the blockchain is associated with a blockchain protocol or a functionally limited scripting language that does not inherently support incorporating control structures for the loop into code written in a scripting language; and
wherein the information relating to at least one specified iteration of the loop includes the index of the at least one specified iteration of the loop and one or more parameters used within the loop.

2. The method according to claim 1, wherein the steps affecting the execution of the loop include:
restarting the loop in a specified iteration having the index provided by the metadata; and
inputting the one or more parameters by reading them directly from the metadata in the transaction or from an external source.

3. The method according to claim 1 or 2, further comprising the steps of generating an encrypted hash of the code associated with the loop and storing the encrypted hash in a transaction on the blockchain.

4. The method according to any one of claims 1 to 3, wherein the computing resource is configured to monitor the state of the blockchain for transactions having the cryptographic hash of the code associated with the loop.

5. The method according to any one of claims 1 to 4, further comprising the steps of:
evaluating a condition for each iteration of the loop; and
performing at least one action based on the result of the evaluation, wherein the at least one action comprises the steps of causing at least one transaction to be written to the blockchain and/or causing an off-blockchain action to be performed.

6. The method according to claim 5, wherein the conditions relate to data received, detected, or generated by the computing resources, or to the state of the blockchain.

7. The method according to any one of claims 1 to 6, wherein the computing resource is:
i) an off-blockchain resource separate from the blockchain; and/or
ii) configured to implement a control stack for a Turing machine; and/or
iii) configured to use the blockchain as an imerasable tape for a Turing machine;
and/or
iv) configured to monitor the state of the blockchain, values generated or received by the computing resource and/or, data or signal sources provided away from the blockchain.

8. The method according to any one of claims 1 to 7, comprising:
i) utilizing the blockchain as a storage component for data, instructions, or pointers to data and/or instructions; and
ii) utilizing a computing resource as a control flow management component for Turing complete processing, wherein the computing resource is configured to perform a loop mechanism.

9. The method according to any one of claims 1 to 8, further comprising the step of restarting the loop at a specified iteration if the computing resource detects a predetermined hash of a portion of code in a transaction within the blockchain, wherein the information relating to the iteration is specified using metadata provided within or in connection with the transaction.

10. The method according to any one of claims 1 to 9, wherein the code of the loop is hardcoded within or on the computing resource, stored in a private or publicly available file, and/or stored as an entry on a private or public hash table file, and/or is a static code block having hardcoded variables or at least one parameter, and/or relates to or has at least one of the following: a parameter input, initialized or instantiated by a single value of any data format, a parameter that is part of the code, a parameter read from metadata in a blockchain transaction or from a source outside the computing resource, a parameter read from a database or a private or public file or hash table, and/or a parameter input using a value accessed using at least one pointer to a data source, the at least one pointer being stored as metadata in a transaction on the blockchain.

11. The method according to any one of claims 1 to 10, wherein the computing resource has or communicates a registry that enables the computing resource to access a pre-stored version of a subroutine, and the registry stores: i) an encrypted hash of the code associated with the loop, and ii) information indicating the location from which a copy of the code can be accessed.

12. The method according to any one of claims 1 to 11, further comprising the step of updating the code for the loop so that existing code is replaced with new code using a blockchain transaction, i) the transaction is a multi-signature P2SH transaction, or ii) the method further comprising the step of storing the hash of the existing code and the hash of the new code.

13. The method according to any one of claims 1 to 12, further comprising the step of using the state of the blockchain to influence the execution of the loop by monitoring the current state of the blockchain for transactions that match a start or trigger condition, a repeat condition, or a stop condition.

14. The method according to any one of claims 1 to 13, wherein the process comprises i) an automated vote counting process and/or ii) the distribution or allocation of tokens to voters, each token being associated with a quantity of cryptocurrency.

15. A computer-based system configured to perform the method described in any one of claims 1 to 14, and configured to control loop-based processing performed on computing resources using a blockchain, the system comprising:
a blockchain; and
computing resources configured to execute a loop such that the execution of the loop is affected by the state of the blockchain.
